# EUROPÄISCHE PATENTANMELDUNG

(11) **EP 2 551 301 A1**
(43) Veröffentlichungstag der Anmeldung: **30.01.2013**
(21) Anmeldenummer: 11175967.6
(22) Anmeldetag: 29.07.2011
(51) Int. Cl.: C08L 67/02, C08J 5/18

(54) **Biologisch abbaubare Polyesterfolie**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft eine biologisch abbaubare Polyesterfolie enthaltend:
i) 80 bis 95 Gew.-%, bezogen auf das Gesamtgewicht der Komponenten i bis ii, eines biologisch abbaubaren Polyesters auf Basis von aliphatischen und aromatischen Dicarbonsäuren und einer aliphatischen Dihydroxyverbindung;
ii) 5 bis 20 Gew.-%, bezogen auf das Gesamtgewicht der Komponenten i bis ii, Polyhydroxyalkanoat;
iii) 0 bis 25 Gew.-%, bezogen auf das Gesamtgewicht der Komponenten i bis vi, Calciumcarbonat;
iv) 0 bis 15 Gew.-%, bezogen auf das Gesamtgewicht der Komponenten i bis vi, Talk;
v) 0 bis 30 Gew.-%, bezogen auf das Gesamtgewicht der Komponenten i bis vi, Polymilchsäure und/oder Stärke;
vi) 0 bis 2 Gew.-%, bezogen auf das Gesamtgewicht der Komponenten i bis vi, 2-(4,6-Bis-biphenyl-4-yl-1,3,5-triazin-2-yl)-5-(2-ethyl-(n)-hexyloxy)phenol.

Weiterhin betrifft die Erfindung die Verwendung dieser Polyesterfolien, insbesondere für Agraranwendungen wie Mulchfolien.

## Beschreibung

Die vorliegende Erfindung betrifft eine biologisch abbaubare Polyesterfolie enthaltend:
i) 80 bis 95 Gew.-%, bezogen auf das Gesamtgewicht der Komponenten i bis ii, eines biologisch abbaubaren Polyesters auf Basis von aliphatischen und aromatischen Dicarbonsäuren und einer aliphatischen Dihydroxyverbindung;
ii) 5 bis 20 Gew.-%, bezogen auf das Gesamtgewicht der Komponenten i bis ii, Polyhydroxyalkanoat;
iii) 0 bis 25 Gew.-%, bezogen auf das Gesamtgewicht der Komponenten i bis vi, Calciumcarbonat;
iv) 0 bis 15 Gew.-%, bezogen auf das Gesamtgewicht der Komponenten i bis vi, Talk;
v) 0 bis 30 Gew.-%, bezogen auf das Gesamtgewicht der Komponenten i bis vi, Polymilchsäure und/oder Stärke;
vi) 0 bis 2 Gew.-%, bezogen auf das Gesamtgewicht der Komponenten i bis vi, 2-(4,6-Bis-biphenyl-4-yl-1,3,5-triazin-2-yl)-5-(2-ethyl-(n)-hexyloxy)phenol.

Weiterhin betrifft die Erfindung die Verwendung dieser Polyesterfolien, insbesondere für Agraranwendungen wie Mulchfolien.

Polyesterfolien (250 Mikrometer dicke Chill roll-Folien) aus den Komponenten i und ii werden bereits in der EP-A 2 330 157 erwähnt. Spezifisch offenbart werden Mischungen in dem Bereich von 25 bis 75 Gew.-% aliphatisch-aromatischer Polyester (Komponente i) und 25 bis 75 Gew.-% Polyhydroxyalkanoat (Komponente ii), vorzugsweise Poly(3-hydroxybutyrat-co-3-hydroxyhexanoat). Insbesondere hinsichtlich der Weiterreißfähigkeit können diese Folien jedoch nicht überzeugen.

Ziel der vorliegenden Erfindung war es, biologisch abbaubare Polyesterfolien mit einer verbesserten Weiterreißfähigkeit bereitzustellen.

Überraschenderweise wurde gefunden, dass die eingangs erwähnten Polyesterfolien mit einem Polyhydroxyalkanoat-Anteil von lediglich 5 bis 20 Gew.-% bessere Weiterreißfähigkeiten aufweisen.

Auch wurde gefunden, dass die Weiterreißfähigkeit noch weiter verbessert werden kann, wenn den erfindungsgemäßen Folien 10 bis 25 Gew.-%, bezogen auf das Gesamtgewicht der Komponenten i bis v, Calciumcarbonat (Komponente iii) zugegeben wird.

Mit Füllstoff versehene, biologisch abbaubare Polyesterfolien sind aus der WO2002/016468 bekannt. In der WO2010/118041 wird offenbart, dass der Zusatz von hochreinem Calciumcarbonat das Verarbeitungsfenster von Polyhydroxyalkanoaten erweitert. Auf den Einfluß des Calciumcarbonats auf die Weiterreißfähigkeit von Folien aus Polyhydroxyalkanoaten und insbesondere von Folien auf Basis der erfindungsgemäßen Mischung aus aliphatisch-aromatischen Polyestern und Polyhydroxyalkanoaten wird in der WO2010/118041 nicht hingewiesen.

Ein weiteres Ziel der vorliegenden Erfindung war es Polyestermischungen zu entwickeln, die prozessfähig zu Blasfolien verarbeitet werden können. Dünne Folien, d.h. Folien mit einer Dicke kleiner 50 oder vorzugsweise kleiner als 30 Mikrometern werden in der Regel durch Blasen hergestellt. Hierzu sind Polymermischungen notwendig, die eine bestimmte Viskosität und Blasenstabilität aufweisen.

Die vorliegende Erfindung betrifft weiterhin äußerst blasenstabile Polymermischungen, die neben den zuvor erwähnten Komponenten i bis iii, 3 bis 15 Gew.-%, bezogen auf das Gesamtgewicht der Komponenten i bis v, Talk enthalten.

Auf die vorteilhafte Kombination der Füllstoffe Calciumcarbonat (Komponente iii) und Talk (Komponente iv) wird in keiner der vorgenannten Schriften hingewiesen.

Biologisch abbaubare Polyesterfolien können beispielsweise als Agrarfolien eingesetzt werden. Hier ist neben dem Erfordernis der hohen Weiterreißfestigkeit die Stabilität gegenüber Sonnenlicht insbesondere für transparente Agrarfolien entscheidend. Schwarz (Ruß) eingefärbte Agrarfolien verfügen bereits über einen UV absorbierten Effekt, allerdings wird auch die Wärmestrahlung absorbiert wodurch weniger Wärme bis zum Boden durchgelassen wird und somit zumindest für bestimme Anbauprodukte wie z.B. Melonen, Mais ein geringere Ausbeute/Ernteverfrühung erreicht werden kann.

Insbesondere für Agraranwendungen werden UV Absorber (vi) verwendet, die auf einem extrem stabilen Chromophor, der zur Klasse der Triazine gehört, beruhen und über ein außergewöhnliches Absorptionsvermögen verfügen. Durch seinen sehr hohen Absorptionsgrad sowie einer sehr breiten Absorptionskurve übertrifft dieser UV Absorber im Wellenlängenbereich 290 und 350 Nanometer alle anderen heute eingesetzten UV Absorber. Weiterhin verfügt der UV Absorber über eine hervorragende Lichtstabilität und geringe Flüchtigkeit, wodurch sich das Absorbtionsvermögen im Laufe der Zeit kaum verändert.

Aus WO 2009/071475 sind Agrarfolien auf Basis von beispielsweise Polyethylen bekannt, die Hydroxyphenyl-Triazine als Stabilisator enthalten. Polyesterfilme auf Basis von PM MA werden in der WO 2009/071475 ebenfalls erwähnt. Biologisch abbaubare Polyesterfilme werden in der WO 2009/071475 nicht explizit beschrieben. Biologisch abbaubare transparente Agrarfolien auf Basis eines biologisch abbaubaren Polyesters bestehend aus aliphatischen und/oder aromatischen Dicarbonsäuren und aliphatischen Dihydroxyverbindung weisen in der Praxis häufig eine zu kurze Standzeit, je nach Wanddicke, von nur 2 Wochen auf. Für die UV- Stabilisation von Agrarfolien werden üblicherweise Lichtschutzmittel wie UV Absorber und HALS Stabilisatoren oder eine Kombination von beiden empfohlen. UV Absorber filtern den ultravioletten Anteil aus dem Licht, wodurch die Energie des absorbierten Lichts in Wärme umgewandelt wird. Durch den Einsatz von HALS Stabilisatoren wird die Reaktion von photooxidativ gebildeten Spaltprodukten im Polymer unterbunden. Durch die Kombination der genannten Wirkstoffe wird ein synergistischer Effekt zur Eindämmung der beiden unterschiedlichen Schadensmechanismen erreicht. Untersuchungen an teilaromatischer Polyester der Marke Ecoflex^{®} (BASF SE) haben ergeben, dass Hydroxy-Phenyl-Triazin basierte UV Absorber wie Tinuvin^{®} 1577 auch in Kombination mit einem HALS Stabilisator wie Tinuvin^{®} 111 oder UV Absorber auf Basis Benzophenone wie Uvinul^{®} 3008, zu einer gewissen stabilisierenden Wirkung führt, die aber für transparente Agrarfolien, insbesondere mit geringer Wandstärke, bei weitem nicht ausreichend ist.

Weiterhin können diese Agrarfolien vor allem in dünnen Ausführungsformen (unter 30 microns) hinsichtlich ihrer Weiterreißfestigkeit nicht überzeugen.

Ziel der vorliegenden Erfindung war es demnach weiterhin biologisch abbaubare, bevorzugt transparente Agrarfolien mit längeren Standzeiten im Feld und höherer Weiterreißfestigkeit bereitzustellen.

Demgemäß wurde die biologisch abbaubare Polyesterfolie enthaltend:
i) 80 bis 95 Gew.-%, bevorzugt 85 bis 95 Gew.-%, bezogen auf das Gesamtgewicht der Komponenten i bis ii, eines biologisch abbaubaren Polyesters auf Basis von aliphatischen und/oder aromatischen Dicarbonsäuren und einer aliphatischen Dihydroxyverbindung;
ii) 5 bis 20 Gew.-%, bevorzugt 5 bis 15 Gew.-%, bezogen auf das Gesamtgewicht der Komponenten i bis ii, Polyhydroxyalkanoat;
iii) 0 bis 25 Gew.-%, bevorzugt 10 bis 20 Gew.-%, besonders bevorzugt 15 bis 20 Gew.-%, bezogen auf das Gesamtgewicht der Komponenten i bis vi, Calciumcarbonat;
iv) 0 bis 15 Gew.-%, bevorzugt 5 bis 10 Gew.-%, besonders bevorzugt 5 bis 8 Gew.-%, bezogen auf das Gesamtgewicht der Komponenten i bis vi, Talk;
v) 0 bis 30 Gew.-%, bevorzugt 3 bis 15 Gew.-%, besonders bevorzugt 5 bis 10 Gew.-%, bezogen auf das Gesamtgewicht der Komponenten i bis vi, Polymilchsäure und/oder Stärke;
vi) 0 bis 2 Gew.-%, bevorzugt 0,1 bis 1,5 Gew.-%, besonders bevorzugt 0,5 bis 1,2 Gew.-%, bezogen auf das Gesamtgewicht der Komponenten i bis vi, 2-(4,6-Bis-biphenyl-4-yl-1,3,5-triazin-2-yl)-5-(2-ethyl-(n)-hexyloxy)phenol entwickelt.

Der Einsatz der Komponente vi ist lediglich sinnvoll für Folien, die dauerhaft dem Sonnenlicht ausgesetzt sind, wie beispielsweise Agrarfolien.

Demnach bevorzugt sind Agrarfolien des Anspruchs 7 mit den Komponenten i bis vi gefunden, die sowohl hinsichtlich ihrer Weiterreißfestigkeit wie auch ihrer Standzeit im Feld verbessert sind.

Im Folgenden wird die Erfindung näher beschrieben.

Prinzipiell kommen für die Herstellung der erfindungsgemäßen biologisch abbaubaren Polyestermischungen als Komponente i alle Polyester auf Basis von aliphatischen und aromatischen Dicarbonsäuren und aliphatischen Dihydroxyverbindung, sogenannte teilaromatische Polyester in Betracht. Gemeinsam ist diesen Polyestern, dass sie biologisch abbaubar nach DIN EN 13432 sind. Selbstverständlich sind auch Mischungen mehrerer solcher Polyester als Komponente i geeignet.

Unter teilaromatischen Polyestern (Komponente i) sollen erfindungsgemäß auch Polyesterderivate verstanden werden wie Polyetherester, Polyesteramide oder Polyetheresteramide und Polyesterurethane. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie WO-A 2010/034710). Insbesondere sind unter teilaromatischen Polyestern Produkte wie Ecoflex^{®} (BASF SE) und Eastar^{®} Bio, Origo-Bi^{®} (Novamont) zu verstehen.

Zu den besonders bevorzugten teilaromatischen Polyestern zählen Polyester, die als wesentliche Komponenten
A) eine Säurekomponente aus:
   a1) 30 bis 99 mol-% mindestens einer aliphatischen Dicarbonsäure oder deren esterbildende Derivate oder Mischungen davon
   a2) 1 bis 70 mol-% mindestens einer aromatischen Dicarbonsäure oder deren esterbildendem Derivat oder Mischungen davon und
B) 98 bis 102 mol% bezogen auf die Säurekomponente A eine Diolkomponente B ausgewählt aus mindestens einem C₂-bis C₁₂-Alkandiol oder Mischungen davon und
C) 0,01 bis 3 Gew.-% bezogen auf die Komponenten A und B einer Komponente C ausgewählt aus
   c1) einer Verbindung mit mindestens drei zur Ester- oder Amidbildung befähigten Gruppen,
   c2) eines Di- oder Polyisocyanates,
   c3) eines Di- oder Polyepoxids
oder Mischungen aus c1) bis c3) enthalten.

Als aliphatische Säuren und die entsprechenden Derivate a1 kommen im Allgemeinen solche mit 2 bis 18 Kohlenstoffatomen, vorzugsweise 4 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Oxalsäure, Malonsäure, Bernsteinsäure, Glutarsäure, 2-Methylglutarsäure, 3-Methylglutarsäure, α-Ketoglutarsäure, Adipinsäure, Pimelinsäure, Azelainsäure, Sebacinsäure, Brassylsäure, Fumarsäure, 2,2-Dimethylglutarsäure, Suberinsäure (Korksäure), Diglykolsäure, Oxalessigsäure, Glutaminsäure, Asparaginsäure, Itaconsäure und Maleinsäure. Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Bernsteinsäure, Azelainsäure, Sebacinsäure und Brassylsäure haben zudem den Vorteil, dass sie aus nachwachsenden Rohstoffen zugänglich sind.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Im Allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

Insbesondere bevorzugt sind die folgenden aliphatisch-aromatischen Polyester: Polybutylenadipatterephthalat (PBAT), Polybutylenazealatterepthalat (PBAzT), Polybutylensebacatterephthalat (PBSeT) oder Polybutylensuccinatterephthalat (PBST).

Die bevorzugten teilaromatischen Polyester i sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Unter Polyhydroxyalkanoaten (Komponente ii) werden in erster Linie Poly-4-hydroxybutyrate und Poly-3-hydroxybutyrate und Copolyester der vorgenannten Poly-Hydroxybutyrate mit 3-Hydroxyvalerat, 3-Hydroxyhexanoat und/oder 3-Hydroxyoctanoat verstanden. Poly-3-hydroxybutyrate werden beispielsweise von der Fa. PHB Industrial unter dem Markennamen Biocycle® und von der Fa. Tianan unter dem Namen Enmat® vertrieben.

Poly-3-hydroxybutyrate-co-4-hydroxybutyrate sind insbesondere von der Fa. Metabolix bekannt. Sie werden unter dem Handelsnamen Mirel® vertrieben. Poly-3-hydroxybutyrate-co-3-hydroxyhexanoate sind von der Fa. P&G oder Kaneka bekannt. Poly-3-hydroxybutyrate-co-3-hydroxyhexanoate weisen in der Regel einen 3-Hydroxyhexanoatanteil von 1 bis 20 und vorzugsweise von 3 bis 15 mol% bezogen auf die Komponente ii auf. Insbesondere bevorzugt ist ein 3-Hydroxyhexanoatanteil von 10 bis 13 mol %. Poly-3-hydroxybutyrate-co-3-hydroxyhexanoate sind für die erfindungsgemäßen Polyesterfolien besonders bevorzugt. In Kombination mit den Komponenten i, sowie gegebenenfalls iii, iv und vi liefern sie sehr weiterreißfeste, transparente Folien.

Die Polyhydroxyalkanoate weisen in der Regel ein Molekulargewicht Mw von 100.000 bis 1.000.000 und vorzugsweise von 300.000 bis 600.000 auf.

Die Komponente ii wird in 5 bis 20 Gew.-%, bevorzugt 5 bis 15 Gew.-%, bezogen auf das Gesamtgewicht der Komponenten i bis ii, eingesetzt. Dementsprechend wird Komponente i in 80 bis 95 Gew.-%, bevorzugt 85 bis 95 Gew.-%, bezogen auf das Gesamtgewicht der Komponenten i bis ii, eingesetzt.

Als Komponente iii werden 0 bis 25 Gew.-%, bevorzugt 10 bis 20 Gew.-%, besonders bevorzugt 15 bis 20 Gew.-%, bezogen auf das Gesamtgewicht der Komponenten i bis v, Calciumcarbonat eingesetzt. Anders als in der WO2010/118041 beschrieben, kommt es auf die hohe Reinheit und Armut an Schwermetallen des verwendeten Calciumcarbonats nicht an. Unter anderem hat sich das Calciumcarbonat der Fa. Omya als geeignet erwiesen. Das Calciumcarbonat weist in der Regel eine mittlere Teilchengröße von 0,5 bis 10 Mikrometern bevorzugt 1 - 5, besonders bevorzugt 1 - 2.5 Mikrometern auf.

Als Komponente iv werden 0 bis 15 Gew.-%, bevorzugt 5 bis 10 Gew.-%, besonders bevorzugt 5 bis 8 Gew.-%, bezogen auf das Gesamtgewicht der Komponenten i bis v, Talk eingesetzt. Unter anderem hat sich der Talk der Fa. Mondo Minerals als geeignet erwiesen. Der Talk weist in der Regel eine mittlere Teilchengröße von 0,5 - 10, bevorzugt 1 - 8, besonders bevorzugt 1 - 3 Mikrometern auf.

Interessanterweise hat sich herausgestellt, dass durch den Zusatz von Calciumcarbonat iii (Kreide) die biologische Abbaubarkeit der Artikel noch verbessert werden kann. Mit Talk iv wiederum lässt sich effektiv das E-Modul erhöhen.

Neben den Komponenten i und ii können noch weitere Polyester insbesondere Polymilchsäure (PLA) und/oder Stärke zum Einsatz gelangen (Komponente v).

Polymilchsäure mit dem folgenden Eigenschaftsprofil wird bevorzugt eingesetzt:
- einer Schmelzvolumenrate (MVR bei 190° C und 2.16 kg nach ISO 1133 von -
- 0.5 bis 30 insbesondere 2 bis 9 ml/10 Minuten)
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%.
- einem Molekulargewicht von größer 80 000 Dalton.

Bevorzugte Polymilchsäuren sind beispielsweise NatureWorks® 6201 D, 6202 D, 6251 D, 3051 D und insbesondere 4020 D, 4032D oder 4043D (Polylmilchsäure der Fa. NatureWorks).

Weiterhin können der Polyestermischung noch organische Füllstoffe wie Stärke oder Amylose zugesetzt werden. Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).

Die Komponente v wird in der Regel in 0 bis 30 Gew.-%, bevorzugt 3 bis 15 Gew.-% und insbesondere bevorzugt 5 bis 10 Gew.-%, bezogen auf die Komponenten i bis vi eingesetzt.

Als Komponente vi werden 0 bis 2 Gew.-%, bevorzugt 0,1 bis 1,5 Gew.-%, besonders bevorzugt 0,5 bis 1,2 Gew.-%, bezogen auf das Gesamtgewicht der Komponenten i bis vi, 2-(4,6-Bis-biphenyl-4-yl-1,3,5-triazin-2-yl)-5-(2-ethyl-(n)-hexyloxy)phenol eingesetzt. Herstellung und Eigenschaften des UV-Absorber vi sind aus der WO 2009/071475 bekannt. In diesem Zusammenhang sei auf die WO 2009/071475 explizit verwiesen.

Neben den Füllstoffen iii und iv können noch weitere Mineralien enthalten sein wie: Graphit, Gips, Leitruß, Eisenoxid, Calciumchlorid, Kaolin, Siliziumdioxid (Quarz), Natriumcarbonat, Titandioxid, Silikat, Wollastonit, Glimmer, Montmorellonite und Mineralfasern. Die Mineralien können auch als Nanofüllstoffe eingesetzt werden.

Nanofüllstoffe sind insbesondere feinteilige Schichtsilikate, bevorzugt Tonmineralien, besonders bevorzugt Montmorillonit enthaltend Tonmineralien, deren Oberfläche mit einem oder mehreren quarternären Ammoniumsalzen und/oder Phosphoniumsalzen und/oder Sulfoniumsalzen modifiziert sind. Als Tonmineralien bevorzugt sind natürliche Montmorillonite und Bentonite

Weiterhin kann die erfindungsgemäße Polyesterfolie weitere dem Fachmann bekannte, Additive enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Auch können den Polymermischungen, insbesondere den Polymilchsäurehaltigen Mischungen 0 bis 1 Gew.-%, bevorzugt 0,01 bis 0,8 Gew.-%, besonders bevorzugt 0,05 bis 0,5 Gew.-%, bezogen auf das Gesamtgewicht der Komponenten i bis vi, eines Epoxidgruppen-haltigen Copolymers auf Basis Styrol, Acrylsäureester und/oder Methacrylsäureester zugesetzt werden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{w} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Besonders geeignet ist Joncryl® ADR 4368. Komponente v wird insbesondere in PLA haltigen Polyestermischungen eingesetzt.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Die eingangs genannten biologisch abbaubaren Polyesterfolien sind zur Herstellung von Netzen und Gewebe, Schlauchfolien, Chill-Roll-Folien mit und ohne einer Orientierung in einem weiteren Verfahrensschritt, mit und ohne Metallisierung oder SiOx-Beschichtung geeignet.

Insbesondere eignen sich die eingangs definierten Polyesterfolien enthaltend die Komponenten i) bis v) bzw. i) bis vi) für Schlauchfolien und Stretchfolien. Mögliche Anwendungen sind hier Bodenfaltbeutel, Seitennahtbeutel, Tragetaschen mit Griffloch, Schrumpfetiketten oder Hemdchentragetaschen, Inliner, Schwergutsäcke, Gefrierbeutel, Kompostierbeutel, Landwirtschaftsfolien (Mulchfilme), Folienbeutel zur Verpackung von Nahrungsmitteln, abziehbare Verschlussfolie - transparent oder undurchsichtig - schweißbare Verschlussfolie - transparent oder undurchsichtig -, Wursthülle, Salatfolie, Frischhaltefolie (Stretchfolie) für Obst und Gemüse, Fleisch und Fisch, Stretchfolie zum Einschlagen von Paletten, Folie für Netze, Verpackungsfolien für Snacks, Schoko- und Müsliriegel, peelbare Deckelfolien für Molkereiverpackungen (Joghurt, Sahne etc.), Obst und Gemüse, halbharte Verpackungen für geräucherte Wurst und Käse.

Die Polyesterfolien enthaltend die Komponenten i bis vi) weisen nach der Extrusion zu ein- oder mehrlagigen Schlauch-, Cast- oder Pressfolien eine deutlich höhere Weiterreißfestigkeit (gemäß EN ISO 6383-2:2004) auf verglichen mit Mischungen ohne die Komponenten ii bis v). Die Weiterreißfestigkeit ist eine sehr wichtige Produkteigenschaft vor allem im Bereich dünner (Schlauch-)folien für z.B. Biomüllbeutel oder dünnwandige Tragetaschen (z.B. Hemdchentragetaschen, Obstbeutel). Daneben ist sie von besonderer Bedeutung bei Mulchfolien im Agrarbereich.

Mit Lichtschutzmittel vi) versehene Polyesterfolien kommen insbesondere für Anwendungen, die für den Außenbereich bestimmt sind wie im Bausektor und insbesondere für Agrarprodukte, zum Einsatz. Unter Agrarprodukten werden Mulchfolien, Abdeckfolien, Silo-Folien, Folienbändchen, Gewebe, Vlies-Stoffe, Clips, Textilien, Zwirne, Fischernetze, Umverpackungen wie Schwergutsäcke für beispielsweise Torf, Dünger Zement, Pflanzenschutzmittel, Saatgut oder Blumentöpfe verstanden.

Agrarprodukte sind in der Regel Wind und Wetter und insbesondere dem Sonnenlicht ausgesetzt. Um eine definierte Standzeit im Feld zu gewährleisten, müssen sie stabilisiert werden. Als besonders effizient hat sich hierbei Komponente vi) erwiesen.

Mit den Mischungen der Komponenten i und ii und gegebenenfalls iii bis vi lassen sich im angegebenen Mischungsbereich hervorragend sehr dünnen Folien von beispielsweise 10 bis 25 µm (Mikrometern) herstellen, die gute Eigenschaften für Anwendungen als z.B. Bioabfallbeutel, Tragetaschen oder Mulchfilm aufweisen.

Die Folien in diesem Mischungbereich zeichnen sich durch excellente mechanische Eigenschaften (sehr hohe Zugfestigkeiten, Dehnungen, Weitreißfestigkeiten) bei gleichzeitig sehr hoher Transparenz aus.

Besonders vorteilhaft lassen sich die zuvor genannten weiterreißfesten Folien auf einer Blasfolienanlage herstellen. Voraussetzung hierfür sind - wie bereits erwähnt - besondere Eigenschaften, insbesondere das Fließverhalten und die Blasenstabilität der eingesetzten Polymermischungen. Gegenüber Mischungen mit einem höheren Anteil an Polyhydroxyalkanoaten weisen die erfindungsgemäßen Polymermischungen eine deutlich höhere Blasenstabiltität auf und ermöglichen somit das Herstellen von wesentlich dünneren und gleichförmigeren Folien. Der Zusatz von mineralischen Füllstoffen verbessert nochmals die Weiterreißfestigkeiten und führt auch zu einem gleichmässigeren Reissverhalten in Folienlängs- und Querrichtung.

Die Blasfolienherstellung beziehungsweise Blasfolienextrusion kann beispielsweise wie in der EP 1491319 oder im experimentellen Teil beschrieben durchgeführt werden. Die Polymermischung wird in einem Extruder bei 150 bis 250°C, vorzugweise 160 bis 220°C erzeugt und durch ein geeignetes Werkzeug mit Ringdüse gedrückt. Mit den erfindungsgemäßen Polymermischungen lassen sich hohe Durchsätze von bis zu 1500 kg/h realisieren. Durch die Abzugsgeschwindigkeit lassen sich vorzugsweise Aufblasverhältnisse von 2 : 1 bis 6 : 1, und insbesondere bevorzugt von 3:1 bis 5:1 einstellen.

### Anwendungstechnische Messungen:

Die Zugtests wurden an rechteckigen Folienstreifen in der angegebenen Dicke nach ISO 527-3 im Normklima bei 50% Luftfeuchte und 23 °C durchgeführt. Der E-Modul wurde bei einer Geschwindigkeit von 1 mm/min ermittelt, die restlichen Daten bei einer Streckgeschwindigkeit von 125 mm/min.

Die Durchstossfestigkeiten (-arbeit) wurden auf einer Zwick 1120 mit einem geschmierten 2,5mm breiten Prüfstempel durchgeführt. Die Prüfgeschwindigkeit betrug 500mm/min, der Kraftaufnehmer 500N und die Vorkraft 0,2N.

Die Gesamttransmission, der Haze nach ASTM D 1003 (Trübung) und die Clarity (Bildschärfe) wurden mit dem Gerät "Haze-Gard plus" von der Firma "BYK Gardner" in der angegebenen Foliendicke gemessen.

Die Folienblasenstabilität während der Verarbeitung wurde subjektiv und anhand der Dickenverteilung beurteilt und Wertungen von sehr gut (++), gut (+), mittel (o), schlecht (-) bis sehr schlecht (--) vergeben.

Die Weiterreißfestigkeit wurde durch einen Elmendorf-Test gemäß

EN ISO 6383-2:2004 mit einem Gerät der Fa. ProTear an Prüfkörpern mit konstantem Radius (43 mm Risslänge) bestimmt.
1. Eingesetzte Materialien:
   i teilaromatischer Polyester (Komponente i)
      i-1) Polybutylenadipatterephthalat: Ecoflex F Blend C1200 (alte Produktbezeichnung: Ecoflex FBX 7011) der Fa. BASF SE
   ii Polyhydroxyalkanoat (Komponente ii)
      ii-1) Poly-3-hydroxybutyrat-co-3-hydroxyhexanoat mit 11% Hexanoat-Comonomer-Anteil der Firma Kaneka (Handelsname Aonilex).
   iii Calciumcarbonat (Komponente iii)
      iii-1) Calciumcarbonat mit einem Topcut (d98%) von 5 Mikrometern der Firma OMYA
      iii-2) Batch: 60%iger Masterbatch von CaCO3 Typ OMYA BLS in Komponente i
   iv Talk (Komponente iv)
      iv-1) Talk mit einem Topcut (d98%) von 8 Mikrometern der Firma Mondo Minerals
   v Polymilchsäure (Komponente v)
      v-1) Polymilchsäure (PLA) Typ 4043D der Firma Natureworks LLC
   Weitere Einsatzstoffe:
      vii-1) Batch: 10 Gew.-%iger Masterbatch von Erucasäureamid in Komponente i

### Allgemeine Herstellvorschriften der Polymermischungen

### Herstellvorschrift 1 (Beispiele 1 bis 5 und Vergleichsbeispiele 6 und 8):

Für die Beispiele 1 bis 5 und Vergleichsbeispiele 6 und 8 wurden die in Tabelle 1 genannten Mengen auf einem Extruder vom Typ Werner & Pfleiderer MC-26 bei einer Zonentemperatur von 150 °C und einer Massetemperatur von maximal 187 °C (gemessen an der Düsenplatte mittels Abstich des Stranges) compoundiert. Die Komponenten i-1, ii-1, iii-2, v-1 und vii-1 wurden per Coldfeed in Zone 0 dosiert. Die Komponenten iii-1 und iv-1 wurden in Zone 4 per Seitenfeeder zudosiert und rückwärtig in Zone 3 die eingetragene Luft durch eine Vakuumentgasung entfernt.

### Herstellvorschrift 2 (Vergleichsbeispiel 7):

Für das Vergleichsbeispiele 7 wurden die in Tabelle 1 genannten Mengen auf einem Extruder vom Typ Werner & Pfleiderer ZSK-30 bei einer Zonentemperatur von 150 °C und einer Massetemperatur von maximal 185 °C (gemessen an der Düsenplatte mittels Abstich des Stranges) compoundiert. Die Komponenten i-1, iii-2, und vii-1 wurden per Coldfeed in Zone 0 dosiert, ii-1 wurde per Seitenfeeder in Zone 5 zugegeben.

### Folienblasanlage:

Die Schlauchfolienanlage wurde mit einem 25D langen Extruder mit einer 45mm Schnecke betrieben, der mit einer genuteten Einzugszone und einer Dreizonenschnecke mit Scher- und Mischteil ausgestattet war. Die Einzugszone wurde bei maximalem Durchsatz mit kaltem Wasser gekühlt. Die Zonentemperaturen wurden so gewählt, dass die Massetemperatur zwischen 170 und 190 °C lag. Die Düsentemperaturen lagen im Bereich von 165-185 °C. Der Düsendurchmesser betrug 75mm, die Spaltweite 0,8 mm. Das Aufblasverhältnis von 3,5 : 1 ergab eine Liegebreite des Folienschlauchs von 412 mm.

Die Compounds wurden auf der Folienanlage zu Schlauchfolien mit unterschiedlichen Dicken verarbeitet.

**Tabelle 1: Herstellrezepturen (Gew-%) für die Polymermischungen der Beispiele 1 bis 5 und Vergleichsbeispiele 6 bis 8:**

| Einsatzstoffe | Bsp. 1 | Bsp. 2 | Bsp. 3 | Bsp. 4 | Bsp. | V-Bsp. 6 | V-Bsp. 7 | V-Bsp. 8 |
|---|---|---|---|---|---|---|---|---|
| i-1* | 90 | 90 | 90 | 90 | 89 | 75 | 47 | 100 |
| ii-1* | 10 | 10 | 10 | 10 | 11 | 25 | 53 | |
| iii-1** | | 15 | 20 | 20 | 20 | | | |
| iii-2** | | | | | | | 4 | 4 |
| iv-1** | | | | 5 | 5 | | | |
| v-1** | | | | | 11 | | | |
| vii-1** | 1 | | | | | 1 | 1 | 1 |

| | | | | | | | | |
|---|---|---|---|---|---|---|---|---|
| * bezogen auf die Komponenten i und ii ** bezogen auf die Summe der Komponenten i und ii | | | | | | | | |

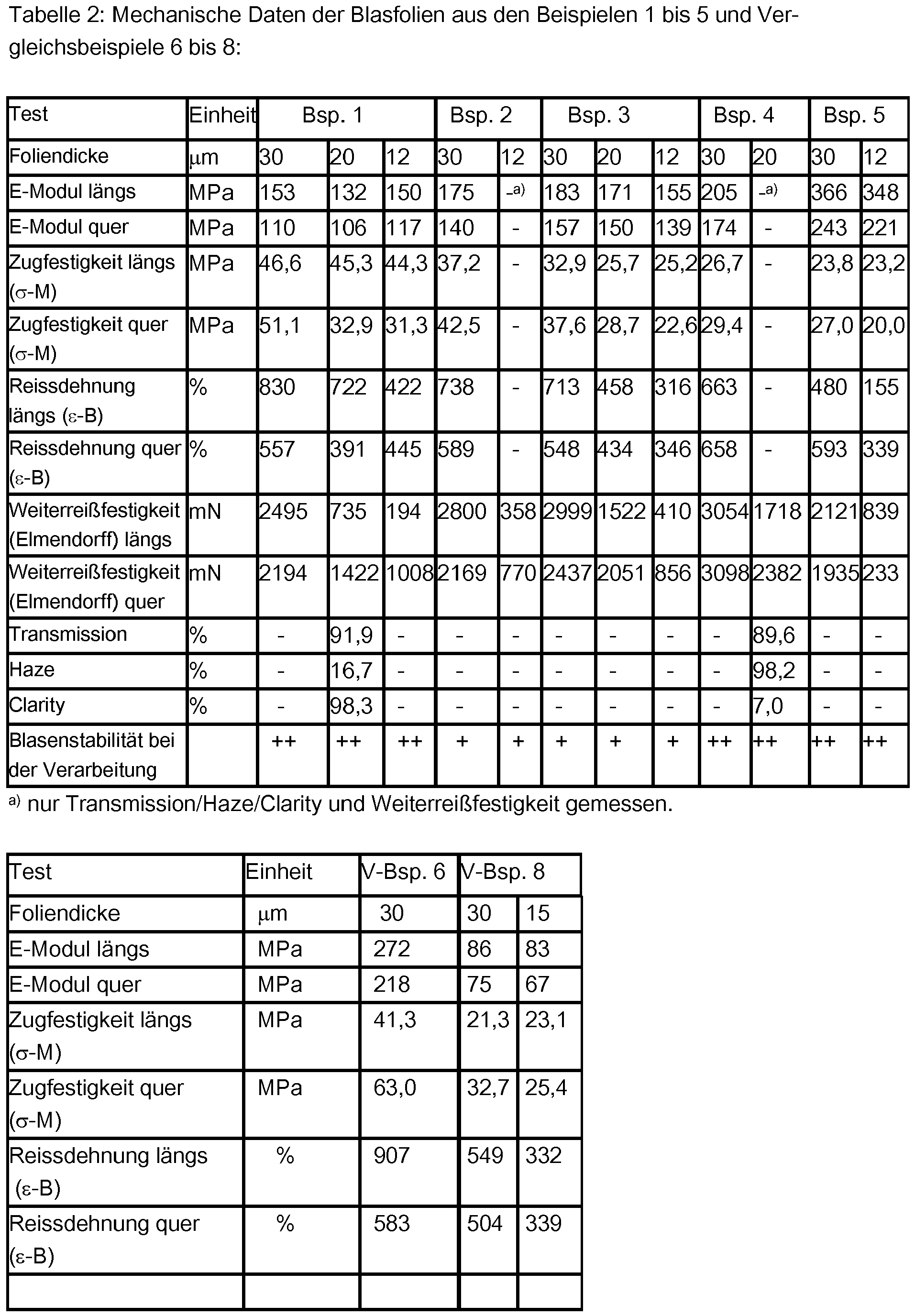

| Weiterreißfestigkeit (Elmendorff) längs | mN | 4961 | 2532 | 444 |
|---|---|---|---|---|
| Weiterreißfestigkeit (Elmendorff) quer | mN | 550 | 2024 | 1056 |
| Transmission | % | - | - | 93,0- |
| Haze | % | - | - | 27,3 |
| Clarity | % | - | - | 85,2 |
| Blasenstabilität bei der Verarbeitung | | + | ++ | ++ |

Vergleichsbeispiel 7 ließ sich aufgrund mangelhafter Schmelzefestigkeit nicht zu Blasfolien mit einheitlicher Dickenverteilung verarbeiten. Die Blasenstabilität wurde mit (- -) bewertet.

Der Vergleich der erfindergemäßen Beispiele 1 bis 5 mit den Vergleichsbeispielen 6 bis 8 zeigt folgende Vorteile der erfindergemäßen Mischungen:
Die Beispiele 1 bis 5 ließen sich problemlos zu Blasfolien mit geringer Dicke bei weiterhin gleichmäßiger Dickenverteilung verarbeiten, was bei den Compounds des Vergleichsbeispiels 7 mit einem höheren PHBH-Anteil nicht mehr gelang. Bei der Blasfolienherstellung dünnen Folien mit weniger als 30 Mikrometern Dicke zeigten die erfindungsgemäßen Polymermischungen somit deutliche Vorteile.

Vergleichsbeispiel 6 mit einem geringfügig höheren PHBH-Anteil von 25 Gew.-% ließ sich zwar noch zu Blasfolien verarbeiten, allerdings mit bereits deutlich schlechterer Weiterreißfestigkeit. Insbesondere war das Reißverhalten in Folienlängs- und Querrichtung sehr unterschiedlich und die einzelnen Messwerte streuten sehr stark, d.h. es gab Schwachstellen, bei denen sich die Blasfolie praktisch ohne Widerstand weiterreißen ließ.

Die Folien des Beispiels 1 (ohne mineralische Füllstoffe) waren denen des Vergleichsbeispiel 8 (100 Gew.-% Komponente i; ebenfalls ohne mineralische Füllstoffe) in den mechanischen Eigenschaften überlegen und zeigten gleichzeitig sehr geringe Trübung (Haze). Insbesondere wiesen die Folien des Beispiels 1 höhere Steifigkeiten, höhere Zugfestigkeiten, höhere Reißdehnungen - bei gleichbleibend hohen Weiterreißfestigkeiten - auf.

Die Folien der Beispiele 2 bis 4 zeigten durch die Zugabe von mineralischen Füllstoffen nochmals erhöhte Weiterreißfestigkeiten gegenüber Beispiel 1 sowie gleichmäßigere Weiterreißfestigkeiten in Längs- und Querrichtung.

Die Folie des erfindergemäßen Beispiels 5 zeigte, dass durch den Zusatz von Polymilchsäure die Steifigkeit gegenüber der Folie aus Beispiel 4 noch erhöht werden kann.

Die erfindungsgemäßen Beispiele 4, 5 zeigten durch den Zusatz von Talk eine deutlich verbesserte Blasenstabilität bei der Verarbeitung.

## Patentansprüche

1. Biologisch abbaubare Polyesterfolie enthaltend:
i) 80 bis 95 Gew.-%, bezogen auf das Gesamtgewicht der Komponenten i bis ii, eines biologisch abbaubaren Polyesters auf Basis von aliphatischen und aromatischen Dicarbonsäuren und einer aliphatischen Dihydroxyverbindung;
ii) 5 bis 20 Gew.-%, bezogen auf das Gesamtgewicht der Komponenten i bis ii, Polyhydroxyalkanoat;
iii) 0 bis 25 Gew.-%, bezogen auf das Gesamtgewicht der Komponenten i bis vi, Calciumcarbonat;
iv) 0 bis 15 Gew.-%, bezogen auf das Gesamtgewicht der Komponenten i bis vi, Talk;
v) 0 bis 30 Gew.-%, bezogen auf das Gesamtgewicht der Komponenten i bis vi, Polymilchsäure und/oder Stärke;
vi) 0 bis 2 Gew.-%, bezogen auf das Gesamtgewicht der Komponenten i bis vi, 2-(4,6-Bis-biphenyl-4-yl-1,3,5-triazin-2-yl)-5-(2-ethyl-(n)-hexyloxy)phenol.

2. Biologisch abbaubare Polyesterfolie nach Anspruch 1, wobei der biologisch abbaubare Polyester (Komponente i) ausgewählt ist aus der Gruppe bestehend aus: Polybutylenadipatterephthalat (PBAT), Polybutylensebacatterephthalat (PBSeT), Polybutylenazealatterepthalat (PBAzT) oder Polybutylensuccinatterephthalat (PBST).

3. Biologisch abbaubare Polyesterfolie nach einem der Ansprüche 1 und 2, wobei das Polyhydroxyalkanoat (Komponente ii) ein Poly(3-hydroxybutyrate-co-3-hydroxyhexanoate) ist.

4. Biologisch abbaubare Polyesterfolie nach einem der Ansprüche 1 bis 3 enthaltend:
iii) 10 bis 25 Gew.-%, bezogen auf das Gesamtgewicht der Komponenten i bis vi, Calciumcarbonat.

5. Biologisch abbaubare Polyesterfolie nach Anspruch 4 enthaltend:
iv) 3 bis 15 Gew.-%, bezogen auf das Gesamtgewicht der Komponenten i bis vi, Talk.

6. Biologisch abbaubare Polyesterfolie nach einem der Ansprüche 1 bis 5 enthaltend:
v) 5 bis 30 Gew.-%, bezogen auf das Gesamtgewicht der Komponenten i bis vi, Polymilchsäure und/oder Stärke.

7. Biologisch abbaubare Polyesterfolie nach einem der Ansprüche 1 bis 6 enthaltend:
vi) 0,1 bis 1,5 Gew.-%, bezogen auf das Gesamtgewicht der Komponenten i bis vi, 2-(4,6-Bis-biphenyl-4-yl-1,3,5-triazin-2-yl)-5-(2-ethyl-(n)-hexyloxy)phenol.

8. Bioabbaubare Polyesterfolie nach einem der Ansprüche 1 bis 6 mit einer Schichtdicke von 10 bis 25 Mikrometern.

9. Verwendung der Polyesterfolie nach einem der Ansprüche 1 bis 8 zur Herstellung von Einkaufstaschen, Kompostbeuteln oder Inlinern für die Biomülltonne.

10. Verwendung der Polyesterfolie nach Anspruch 7 zur Herstellung von Agrarprodukten ausgewählt aus der Gruppe bestehend aus Mulchfolien, Abdeckfolien, Silo-Folien, Folienbändchen, Geweben, Vlies-Stoffen, Clips, Textilien, Zwirnen, Fischernetzen, Umverpackungen, Schwergutsäcken, Blumentöpfen.

11. Verfahren zur Herstellung der Polyesterfolie gemäß einem der Ansprüche 1 bis 8 durch ein Blasfolienverfahren, **gekennzeichnet durch** ein Aufblasverhältnis von 2 : 1 bis 6 : 1.
